# EUROPEAN PATENT APPLICATION

(11) **EP 4 835 991 A1**
(43) Date of publication of application: **04.11.2026**
(21) Application number: 24909467.3
(22) Date of filing: 19.04.2024
(51) Int. Cl.: H01M 4/36, H01M 4/587, H01M 4/04, H01M 4/62, H01M 4/133, H01M 10/0525

(54) **GRAPHITE NEGATIVE ELECTRODE MATERIAL AND PREPARATION METHOD THEREFOR, NEGATIVE ELECTRODE SHEET, AND LITHIUM-ION BATTERY**

(30) Priority: 29.12.2023 CN 202311870361
(71) Applicant: Hunan Zhongke Shinzoom Co., Ltd., Ningxiang Changsha, Hunan 410600 (CN)
(72) Inventor: HU, Kongming, Hunan 410600 (CN); WANG, Zhiyong, Hunan 410600 (CN); SHE, Yingqi, Hunan 410600 (CN); ZHONG, Shulin, Hunan 410600 (CN); YUAN, Min, Hunan 410600 (CN)
(74) Representative: Murgitroyd & Company
(86) International application number: PCT/CN2024/088884
(87) International publication number: WO 2025/138499

(57) **Abstract**

A graphite negative electrode material and a preparation method therefor, a negative electrode sheet, and a lithium-ion battery, relating to the technical field of secondary batteries. According to the preparation method for the graphite negative electrode material, a graphite material is coated with amorphous carbon, and carbon coating is carried out in two steps; in a low-temperature mixing process, a graphitized product and a coating agent are uniformly mixed, and in a high-temperature dynamic coating process, in addition to completing further mixing, most of light components are removed by means of high-temperature heat treatment, the coating agent undergoes polycondensation and cross-linking, a surface coating layer with high isotropic degree and good coating effect is formed after carbonization, uncontrollable agglomeration in the subsequent carbonization process is avoided, and the graphite negative electrode material capable of realizing fast charging and considering energy density is prepared.

## Description

### CROSS REFERENCE TO RELATED APPLICATIONS

This application claims priority to Chinese Application No. 202311870361.7, entitled "GRAPHITE NEGATIVE ELECTRODE MATERIAL AND PREPARATION METHOD THEREFOR, NEGATIVE ELECTRODE SHEET, AND LITHIUM-ION BATTERY", filed to the China National Intellectual Property Administration on December 29, 2023. The entire disclosures of the above application are incorporated herein by reference.

### TECHNICAL FIELD

The present disclosure relates to a field of secondary batteries, and more particularly, to a graphite negative electrode material and a preparation method therefor, a negative electrode sheet, and a lithium-ion battery.

### BACKGROUND

In recent years, lithium-ion batteries have occupied a large market share in a field of electric vehicles. As a demand for shorter charging times continues to increase in a consumer electronics and power battery markets, fast charging technology has become an important trend in the development of lithium-ion battery technology in recent years. As an important component of lithium-ion batteries, an anode material has a significant impact on the performance of lithium-ion batteries. Traditional graphite-based anode materials have advantages such as a low lithium insertion/deinsertion potential, a suitable reversible capacity, abundant resources, and low cost, and have always dominated the anode market.

Therefore, preparing graphite negative electrode materials with better fast-charging performance has become a research hotspot. In the prior art, coating agents such as pitch are used to coat graphite materials to improve their kinetic performance and cycling performance. However, current coating methods either lead to particle agglomeration during the carbonization process after coating, manifested by a large increase in Dᵥ50, usually ≥ 2µm, and the subsequent deagglomeration process damages the coating layer, resulting in poor coating effects; or volatile gases escape during the carbonization process, which may damage the furnace body and even pose safety risks. There are also techniques in the prior art that improve fast-charging performance by controlling a particle size distribution. However, the particle size distribution needs to be controlled within a very narrow range, which is difficult to achieve in actual operation, or a yield is very low, making it impractical.

### SUMMARY

Therefore, the technical problem to be solved by the present disclosure is to overcome the above-mentioned problems in the prior art for improving the fast-charging performance of graphite negative electrode materials, thereby providing a graphite negative electrode material and a preparation method therefor, a negative electrode sheet, and a lithium-ion battery.

To this end, the present disclosure provides the following technical solutions:
The present disclosure provides a method for preparing a graphite negative electrode material, which includes step S1-S3.

In step S1, graphite and a coating agent are mixed to obtain a mixture at a temperature of 30-200°C.

In step S2, the mixture is coated at a temperature of 200-800°C to obtain a coated material.

In step S3, the coated material is carbonized to obtain the graphite negative electrode material.

Optionally, a particle size of the graphite negative electrode material in step S3 and a particle size of the coated material in step S2 satisfy the following relational expression: D1-D2 ≤1.5µm, wherein D1 is a Dᵥ50 of the graphite negative electrode material, and D2 is a Dᵥ50 of the coated material.

In the present disclosure, when the particle size of the graphite negative electrode material in step S3 and the particle size of the coated material in step S2 satisfy the relational expression D1-D2 ≤1.5µm, it indicates that a degree of agglomeration of the negative electrode material during the carbonization process is low, and thus extensive deagglomeration is not subsequently required. This effectively alleviates the deterioration in the fast-charging performance of the graphite negative electrode material caused by damage to the carbon coating layer during subsequent extensive deagglomeration.

Optionally, the graphite in step S1 is one or more of artificial graphite, natural graphite, or recycled graphite.

In the present disclosure, the artificial graphite is an artificially prepared graphite-like substance, which generally includes artificial graphite single particles and artificial graphite secondary particles. The natural graphite is graphite that is naturally formed in nature and generally appears in ores such as graphite schist, graphite gneiss, graphite-containing schist, and metamorphic shale. The recycled graphite is graphite recovered from waste slag, waste liquid, and waste gas generated during the production of natural graphite and artificial graphite, and from decommissioned waste batteries.

Optionally, the graphite is artificial graphite secondary particles.

Optionally, a method for preparing the artificial graphite secondary particles includes: a coke material is provided and pulverized to obtain pulverized coke material, then the pulverized coke material is mixed with a binder, granulated, and finally graphitized to obtain graphitized material.

In the present disclosure, no special requirements are imposed on the pulverization equipment; for example, an impact mill or a ring-roller mill may be used for pulverization.

In the present disclosure, no special requirements are imposed on the granulation equipment; for example, batch vertical, batch horizontal, or continuous horizontal granulation equipment may be used for granulation.

In the present disclosure, no special requirements are imposed on the graphitization equipment; for example, graphitization may be carried out in a crucible graphitization furnace, a box-type graphitization furnace, or an internal series graphitization furnace.

Alternatively or additionally, the coke material includes at least one of petroleum coke, pitch coke, or needle coke.

Alternatively or additionally, a sulfur content of the coke material is 0.2-5wt%.

Optionally, when the coke material is petroleum coke, its sulfur content is 0.5-5wt%.

Optionally, when the coke material is needle coke, its sulfur content is 0.2-2wt%.

In the present disclosure, raw petroleum coke or raw needle coke with a specific sulfur content is optionally used as the raw material. Because the raw material has a high degree of isotropy, the material after graphitization has high porosity. This can shorten the transmission path of lithium ions during charging and discharging, which is beneficial for improving the fast-charging performance of the graphite negative electrode material.

Alternatively or additionally, the binder is at least one of organic compounds such as petroleum pitch, coal pitch, a phenolic resin, an epoxy resin, or starch, and an amount of the binder used accounts for 2-20% of a total mass of the raw material.

Alternatively or additionally, a temperature of granulation is 300-650°C, and a time of the granulation is 4-12h.

Alternatively or additionally, a temperature of graphitization is 2500-3500°C, and a power transmission time of the graphitization is 5-60h.

Alternatively or additionally, a Dᵥ50 of the pulverized coke material is 4-10µm; (Dᵥ90-Dᵥ10)/Dᵥ50=1.0-1.5.

Alternatively or additionally, a Dᵥ50 of granulated material is 8-18µm; (Dᵥ90-Dᵥ10)/Dᵥ50=1.0-1.4.

Alternatively or additionally, a degree of graphitization of the graphitized material is 90%-95%.

Optionally, the coating agent in step S1 is a coal-based liquid coating agent or a petroleum-based liquid coating agent.

Optionally, the coating agent has a dynamic viscosity of 20-1000mPa·s at 60°C.

Optionally, the coal-based liquid coating agent is a coal chemical liquid by-product with a specific distillation range and carbon residue value, and includes at least one of coal tar, phenol oil, naphthalene oil, wash oil, or anthracene oil.

Optionally, the petroleum-based liquid coating agent is a petrochemical liquid by-product with a specific distillation range and carbon residue value, and includes at least one of residual oil, slurry oil, heavy oil, or liquid pitch.

Alternatively or additionally, in step S1, according to a mass of coated carbon residue, an addition of the liquid coating agent accounts for 0.1-3% of a total mass of the coated carbon residue and the graphite.

In the present disclosure, by controlling the particle size, and particularly the particle size distribution, of the raw material and the granulated material within a specific range, a balance between fast-charging performance and energy density is achieved. Compared to prior art methods that solely control particle size distribution, the particle size distribution in the present disclosure is wider, making it more suitable for practical application.

In the present disclosure, a percentage of coated carbon residue is calculated by a formula: (coking mass of the coating agent) / (coking mass of the coating agent + mass of the graphite) × 100%, wherein the coking mass of coating agent=coking value of coating agent × mass of the coating agent.

Alternatively or additionally, in step S1, a mixing time of the graphite and the coating agent is 0.1-12h.

Optionally, in step S2, the coating is performed in a state of stirring or rotating.

Optionally, the stirring or rotating is performed at a speed of 5-500rpm for a duration of 1-12h.

Optionally, the coated material in step S2 includes at least one of the following features (a) to (e):
(a) an oxygen content of the coated material is 100-10000ppm.
(b) a true density of the coated material is 1.80-2.26g/cm³.
(c) a volatile matter residue of the coated material is 0.5%-3%.
(d) a particle size Dᵥ50 of the coated material is 7-16µm.
(e) a (Dᵥ90-Dᵥ10)/Dᵥ50 of the coated material is 0.9-1.3.

In the present disclosure, controlling the oxygen content of the coated material within the range of 100-10000ppm facilitates the formation of a carbon layer structure with a higher degree of disorder after carbonization, thereby improving the fast-charging performance of the graphite negative electrode material. However, when the oxygen content is too high, the coated material has more structural defects after carbonization. An increased number of defects leads to a lower initial coulombic efficiency and deteriorated cycling performance of the graphite anode. When the oxygen content is too low, the formation of a carbon layer structure with a higher degree of disorder is not facilitated, which is detrimental to improving the fast-charging performance of the graphite anode.

In the present disclosure, (Dᵥ90-Dᵥ10)/Dᵥ50 (i.e., particle size distribution) reflects the degree to which the particle sizes of larger particles and smaller particles in the graphite negative electrode material deviate from the volume average particle size (i.e., Dᵥ50). Controlling the (Dᵥ90-Dᵥ10)/Dᵥ50 of the coated material within the range of 0.9-1.3 is beneficial for increasing the porosity of the electrode sheet, thereby improving the fast-charging performance of the graphite negative electrode material.

Optionally, in step S3, a temperature of the carbonizing is 1000-1500°C, and a time of the carbonizing is 2-24h.

In the present disclosure, there are no special requirements for the carbonization equipment. For example, the carbonization can be carried out in a pusher kiln, a roller hearth kiln, a tunnel kiln, or a rotary kiln.

The present disclosure provides a graphite negative electrode material, wherein its Id/Ig in Raman spectrum is 0.1-0.4, and (Dᵥ90-Dᵥ10)/Dᵥ50 is 0.9-1.3.

Optionally, an oxygen content of the graphite negative electrode material is 100-5000ppm, and Dᵥ50 is 12-16µm.

In the present disclosure, Id/Ig is s ratio of the intensity of the D-peak near 1300cm⁻¹ to the intensity of the G-peak near 1580cm⁻¹ in the Raman spectrum.

The present disclosure also provides a negative electrode sheet, includes the above-mentioned graphite negative electrode material or the graphite negative electrode material prepared by the above-mentioned preparation method.

The present disclosure also provides a lithium-ion battery, includes the above-mentioned negative electrode sheet.

In the present disclosure, when the lithium-ion secondary battery system is used in combination with nickel-cobalt-manganese ternary materials, lithium iron phosphate materials, or lithium cobalt oxide materials, it has the fast-charging capability of charging at a rate of 3C-6C without lithium plating.

In the present disclosure, a method for preparing the negative electrode sheet is conventional in the art. Typically and non-limitingly, the method for preparing the negative electrode sheet includes: thoroughly stirring and mixing the above-prepared graphite negative electrode material, a negative electrode conductive agent, and a negative electrode binder to form a uniform negative electrode slurry; coating the negative electrode slurry onto the surface of a negative electrode current collector, and then drying and cold-pressing to obtain the negative electrode sheet.

The above-mentioned negative electrode conductive agent could be a conductive material commonly used in the art, including but not limited to: at least one of graphite, carbon nanotubes, nanofibers, carbon black, and graphene. Specifically, it can be selected from at least one of SP, KS-6, acetylene black, Ketjenblack ECP with a branched structure, SFG-6, vapor-grown carbon fiber (VGCF), carbon nanotubes (CNTs), and graphene, and composite conductive agents thereof.

The above-mentioned negative electrode binder can be a binder commonly used in the art, and could be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

Other additives may also be added in the process of preparing the negative electrode sheet, for example, a thickener such as sodium carboxymethyl cellulose (CMC-Na). Based on a total weight of the negative electrode active layer, a weight ratio of other additives in the negative electrode active layer is 0-15wt%.

The current collector in the negative electrode sheet could be a metal foil or a composite current collector. For example, as the metal foil, copper foil could be used. The composite current collector could include a polymer material base layer and a metal layer formed on at least one surface of the polymer material base layer. The composite current collector could be formed by forming a metal material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

A composition and preparation method of the lithium-ion battery includes: a positive electrode sheet, a separator, a negative electrode sheet, and an electrolyte, wherein the positive electrode sheet, the negative electrode sheet, the separator, and the electrolyte are all selected by conventional techniques, and their preparation methods are also conventional technical means.

A method for preparing the positive electrode sheet in the lithium-ion battery includes: thoroughly stirring and mixing a positive electrode active material, a positive electrode conductive agent, and a positive electrode binder in an appropriate amount of solvent to form a uniform positive electrode slurry; coating the positive electrode slurry onto the surface of a positive electrode current collector aluminum foil, and then drying and cold-pressing to obtain the positive electrode sheet.

The above-mentioned positive electrode active material could include layered lithium cobalt oxide LiCoO₂ material (LCO), spinel lithium manganate LiMn₂O₄ material (LMO), olivine lithium iron phosphate LiFePO₄ material (LFP), olivine lithium manganese iron phosphate LiMn_{0.8}Fe_{0.2}PO₄ material (LMFP), layered ternary material LiNi_{1/3}Mn_{1/3}Co_{1/3}O₂ material (NMC333), layered ternary material LiNi_{0.4}Mn_{0.4}Co_{0.2}O₂ (NMC442), LiNi_{0.5}Mn_{0.4}Co_{0.2}O₂ (NMC532), LiNi_{0.6}Mn_{0.4}Co_{0.2}O₂ (NMC622), LiNi_{0.7}Mn_{0.4}Co_{0.2}O₂ (NMC721), LiNi_{0.8}Mn_{0.4}Co_{0.2}O₂ (NMC811), and layered high-nickel material LiNi_{0.8}Co_{0.15}Al_{0.05}O₂ (NCA), etc.

The above-mentioned positive electrode conductive agent could include at least one of superconducting carbon, acetylene black, carbon black, Ketjenblack, carbon nanotubes, graphene, and carbon nanofibers.

The above-mentioned positive electrode current collector could be a metal foil or a composite current collector. For example, as the metal foil, copper foil could be used. The composite current collector could comprise a polymer material base layer and a metal layer formed on at least one surface of the polymer material substrate. The composite current collector can be formed by forming a metal material (such as copper, copper alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

The technical solution of the present disclosure has the following advantages:
The method for preparing a graphite negative electrode material provided by the present disclosure uses amorphous carbon to coat graphite material. The carbon coating is carried out in two steps. A low-temperature mixing process uniformly mixes the graphitized and the coating agent. A high-temperature dynamic coating process, in addition to completing further mixing, removes most of the light components through high-temperature heat treatment. The coating agent completes polycondensation and cross-linking. After carbonization, this facilitates the formation of a surface coating layer with a high degree of isotropy and a good coating effect, thereby avoiding uncontrollable agglomeration in the subsequent carbonization process. Moreover, a graphite negative electrode material that could achieve both fast charging and high energy density is prepared.

### BRIEF DESCRIPTION OF DRAWINGS

To more clearly illustrate the technical solutions in the specific embodiments of the present disclosure or in the prior art, the accompanying drawings required for the description of the specific embodiments or the prior art will be briefly introduced. It is obvious that the drawings in the following description are only some embodiments of the present disclosure. For those of ordinary skill in the art, other drawings can also be obtained from these drawings without creative effort.
FIG. 1 is a process flow chart for preparing a graphite negative electrode material provided by Example 1 of the present disclosure.
FIG. 2 is an SEM micrograph of a graphite negative electrode material provided by Example 1 of the present disclosure.

### DETAILED DESCRIPTION

The following examples are provided to further understand the present disclosure, but are not limited to the described preferred embodiments and do not constitute a limitation on the content and protection scope of the present disclosure. Any product that is the same as or similar to the present disclosure, derived by anyone in light of the present disclosure or by combining the features of the present disclosure with other prior art, falls within the protection scope of the present disclosure.

In the examples, if specific experimental steps or conditions are not indicated, they can be carried out according to the operations or conditions of conventional experimental steps described in the literature in the art. Reagents or instruments for which the manufacturer is not specified are all conventional reagent products that can be obtained through commercial purchase.

### Example 1

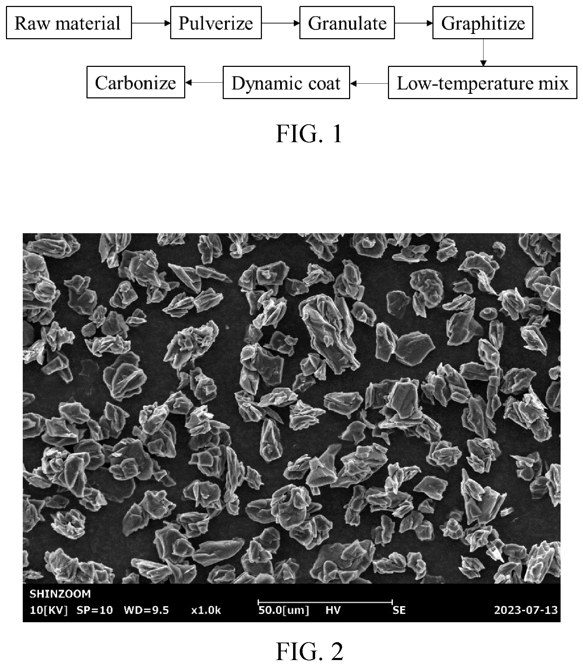

This example provides a graphite negative electrode material. Its preparation process flow chart is shown in FIG. 1, and its preparation method and specific operating parameters are as follows.

In step S1, graphite and petroleum-based liquid coating agent (dynamic viscosity is 100mPa·s at 60°C, coking value is 10.3%) were mixed according to mass ratio of 85%: 15% at 50°C for 6 hours., and mixture was obtained.

In step S2, the mixture was coated dynamically at 600°C, a stirring speed was 80rpm and a stirring time was 6h, and a coated material was obtained.

In step S3, the coated material was carbonized at 1200°C for 12h, and the graphite negative electrode material was obtained. Figure 2 is a SEM image of the obtained product.
carbonizing the coated material at a temperature of 1200°C for a carbonization time of 12 h to obtain the graphite negative electrode material. FIG. 2 is an SEM image of the obtained product.

Wherein, a preparation method for the graphite includes: a raw needle coke with sulfur content of 0.6% was pulverized to a Dᵥ50 of 7µm, (Dᵥ90-Dᵥ10)/Dᵥ50=1.15 to obtain pulverized coke material. And then the pulverized coke material is mixed with 10% asphalt, and granulated at 600°C for 8 hours, a Dᵥ50 of material after the granulation was 13.4µm, (Dᵥ90-Dᵥ10)/Dᵥ50= 1.12. Finally, graphitization is carried out at a temperature of 3000°C, and a power transmission time is 48h.

### Example 2

This example provides a graphite negative electrode material. Its preparation method and specific operating parameters are as follows.

In step S1, graphite and petroleum-based liquid coating agent (dynamic viscosity is 20mPa·s at 60°C, coking value is 6.4%) were mixed according to mass ratio of 95%: 5% at 30°C for 6 hours., and mixture was obtained.

In step S2, the mixture was coated dynamically at 200°C, a stirring speed was 300rpm and a stirring time was 6h, and a coated material was obtained.

In step S3, the coated material was carbonized at 1200°C for 12h, and the graphite negative electrode material was obtained.
carbonizing the coated material at a temperature of 1200°C for a carbonization time of 12 h to obtain the graphite negative electrode material. FIG. 2 is an SEM image of the obtained product.

Wherein, a preparation method for the graphite includes: a raw needle coke with sulfur content of 0.3% was pulverized to a Dᵥ50 of 10µm, (Dᵥ90-Dᵥ10)/Dᵥ50=1.13 to obtain pulverized coke material. And then the pulverized coke material is mixed with 5% asphalt, and granulated at 600°C for 8 hours, a Dᵥ50 of material after the granulation was 13.2µm, (Dᵥ90-Dᵥ10)/Dᵥ50= 1.1. Finally, graphitization is carried out at a temperature of 3000°C, and a power transmission time is 48h.

### Example 3

This example provides a graphite negative electrode material. Its preparation method and specific operating parameters are as follows.

In step S1, graphite and petroleum-based liquid coating agent (dynamic viscosity is 1000mPa·s at 60°C, coking value is 12%) were mixed according to mass ratio of 80%: 20% at 200°C for 10 hours., and mixture was obtained.

In step S2, the mixture was coated dynamically at 800°C, a stirring speed was 100rpm and a stirring time was 6h, and a coated material was obtained.

In step S3, the coated material was carbonized at 1200°C for 12h, and the graphite negative electrode material was obtained.
carbonizing the coated material at a temperature of 1200°C for a carbonization time of 12 h to obtain the graphite negative electrode material. FIG. 2 is an SEM image of the obtained product.

Wherein, a preparation method for the graphite includes: a raw needle coke with sulfur content of 1.8% was pulverized to a Dᵥ50 of 6µm, (Dᵥ90-Dᵥ10)/Dᵥ50=1.22 to obtain pulverized coke material. And then the pulverized coke material is mixed with 10% asphalt, and granulated at 600°C for 8 hours, a Dᵥ50 of material after the granulation was 12.6µm, (Dᵥ90-Dᵥ10)/Dᵥ50= 1.1. Finally, graphitization is carried out at a temperature of 3000°C, and a power transmission time is 48h.

### Example 4

This example provides a graphite negative electrode material. Its preparation method and specific operating parameters are as follows.

In step S1, graphite and coal tar (dynamic viscosity is 500mPa·s at 60°C, coking value is 15.2%) were mixed according to mass ratio of 90%: 10% at 100°C for 8 hours., and mixture was obtained.

In step S2, the mixture was coated dynamically at 500°C, a stirring speed was 300rpm and a stirring time was 6h, and a coated material was obtained.

In step S3, the coated material was carbonized at 1200°C for 12h, and the graphite negative electrode material was obtained.
carbonizing the coated material at a temperature of 1200°C for a carbonization time of 12 h to obtain the graphite negative electrode material. FIG. 2 is an SEM image of the obtained product.

Wherein, a preparation method for the graphite includes: a raw needle coke with sulfur content of 1% was pulverized to a Dᵥ50 of 8µm, (Dᵥ90-Dᵥ10)/Dᵥ50=1.11 to obtain pulverized coke material. And then the pulverized coke material is mixed with 5% asphalt, and granulated at 500°C for 8 hours, a Dᵥ50 of material after the granulation was 11.8µm, (Dᵥ90-Dᵥ10)/Dᵥ50= 1.11. Finally, graphitization is carried out at a temperature of 3200°C, and a power transmission time is 60h.

### Example 5

This example provides a graphite negative electrode material. Compared with Example 1, the difference is that raw needle coke with sulfur content of 0.6% is replaced by raw petroleum coke with sulfur content of 2.5% in the preparation of graphite.

Wherein, a preparation method for the graphite includes: a raw petroleum coke with sulfur content of 2.5% was pulverized to a Dᵥ50 of 7µm, (Dᵥ90-Dᵥ10)/Dᵥ50=1.21 to obtain pulverized coke material. And then the pulverized coke material is mixed with 10% asphalt, and granulated at 600°C for 8 hours, a Dᵥ50 of material after the granulation was 13.1µm, (Dᵥ90-Dᵥ10)/Dᵥ50= 1.16. Finally, graphitization is carried out at a temperature of 3000°C, and a power transmission time is 48h.

### Comparative Example 1

This comparative example provides a graphite negative electrode material. Compared with Example 1, the difference is that the coating step S2 was not performed.

### Comparative Example 2

This comparative example provides a graphite negative electrode material. Compared with Example 1, the difference is that the treatment step S1 was not performed, and the high-temperature dynamic coating step was performed directly after the graphite and the petroleum-based liquid coating agent were mixed.

### Comparative Example 3

This comparative example provides a graphite negative electrode material. Compared with Example 2, the difference is that the temperature of mixing in step S1 is 20°C, and the temperature of coating in step S2 is 150°C.

### Test Examples

The specific test methods for the performance of the intermediate materials and final products obtained in the following examples and comparative examples are as follows.

Test method for degree of graphitization: the degree of graphitization is an indicator that measures the extent to which carbon atoms form a close-packed hexagonal graphite crystal structure. The 004 crystal plane spacing d₀₀₄ is tested using X-ray diffraction (XRD) and calculated according to the following formula: Degree of graphitization=(3.440 - d₀₀₄ × 2) / (3.440 - 3.354) × 100%.

Test method for oxygen content: the oxygen content could be tested by methods known in the art. For example, a Chongqing Yanrui/RO-330 oxygen determinator is used to test the oxygen content.

Test method for sulfur content: the sulfur content could be tested by methods known in the art. For example, a sulfur determinator is used to test the sulfur content.

Test method for coking value of coating agent: the coking value could be tested by methods known in the art, with reference to GB/T 8727-2008 "Method for determination of coking value of coal tar pitch products".

Test method for dynamic viscosity: the dynamic viscosity could be tested by methods known in the art, with reference to GB/T 265-1988 "Petroleum products - Determination of kinematic viscosity and calculation of dynamic viscosity".

Test method for true density: a certain mass of a sample (1g to 5g) is weighed and placed in a true density analyzer. The test system is sealed, and helium or nitrogen gas is introduced according to the program. The true volume is calculated by measuring the pressure of the gas in the sample chamber and the expansion chamber and applying the ideal gas law (PV=nRT), from which the true density is calculated.

Test method for particle size: in this application, Dᵥ50 represents a particle size at which the cumulative volume distribution reaches 50%; Dᵥ90 represents a particle size at which the cumulative volume distribution reaches 90%; and Dᵥ10 represents a particle size at which the cumulative volume distribution reaches 10%. These could all be measured by instruments and methods known in the art. For example, they could be conveniently measured using a laser particle size analyzer with reference to GB/T 19077-2016 "Particle size analysis - Laser diffraction methods". The test instrument can be a Mastersizer 2000E laser particle size analyzer from Malvern Instruments Ltd., UK.

Test method for volatile matter: the volatile matter is the mass loss after moisture correction upon heating in the absence of air under specified conditions. The test is performed with reference to SH/T 0026-1990 "Standard test method for volatile matter in petroleum coke".

Test method for Id/Ig: the peak intensity Id of the graphite negative electrode material between 1340cm⁻¹ and 1380cm⁻¹ and the peak intensity Ig between 1560cm⁻¹ and 1600cm⁻¹ are measured by Raman spectroscopy. Id/Ig is the calculated ratio of the D-peak intensity Id to the G-peak intensity Ig.

The electrochemical performance of the graphite negative electrode materials obtained in each example and comparative example was tested. The specific test methods are as follows:

Preparation method of a lithium-ion battery (coin cell): the graphite negative electrode material prepared above, a conductive agent (Super P), a binder (styrene-butadiene rubber, SBR), and a thickener (sodium carboxymethyl cellulose, CMC-Na) are thoroughly stirred and mixed in an appropriate amount of deionized water in a mass ratio of 96.2:0.8:1.8:1.2 to form a uniform negative electrode slurry. The negative electrode slurry is then coated onto the surface of a copper foil negative electrode current collector, and after drying and cold-pressing, a negative electrode sheet is obtained. The coating thickness of the negative electrode sheet is 200µm. Using the negative electrode sheet, a lithium metal sheet as the counter electrode, a polyethylene (PE) film as the separator, and a mixture of ethylene carbonate (EC), ethyl methyl carbonate (EMC), and diethyl carbonate (DEC) in a volume ratio of 1:1:1 as the electrolyte, a coin-type lithium-ion battery is assembled.

Preparation method of a lithium-ion battery (pouch full cell): a lithium nickel cobalt manganese oxide (LiNi_{0.5}Mn_{0.3}Co_{0.2}O₂, NMC532) material, a conductive agent (Super P), and a binder (polyvinylidene fluoride, PVDF) are thoroughly stirred and mixed in an appropriate amount of N-methylpyrrolidone (NMP) in a mass ratio of 96:2:2 to form a uniform positive electrode slurry. The positive electrode slurry is then coated onto the surface of an aluminum foil positive electrode current collector, and after drying and cold-pressing, a positive electrode sheet is obtained. The coating areal density of the positive electrode sheet is 18.0 mg/cm2. The graphite negative electrode material from the above examples and comparative examples, a conductive agent (Super P), a binder (SBR), and a thickener (CMC-Na) are thoroughly stirred and mixed in an appropriate amount of deionized water in a mass ratio of 95.5:1.0:2.0:1.5 to form a uniform negative electrode slurry. The negative electrode slurry is coated onto the surface of a copper foil negative electrode current collector, and after drying and cold-pressing, a negative electrode sheet is obtained. The coating areal density of the negative electrode sheet is 9.0 mg/cm². Using the negative electrode sheet, the positive electrode sheet, a PE film as the separator, and a mixture of EC, EMC, and DEC in a volume ratio of 1:1:1 as the electrolyte, a pouch-type lithium-ion full cell is assembled.

Test method for reversible specific capacity: a coin cell is placed in a constant temperature chamber at 25°C in a Land battery testing system (T-3002A-5V 1mA). The cell is rested for 6h. The coin cell is discharged at 0.1C to 1.0 mV, rested for 10 min, discharged at 0.01C to 1.0mV, and then charged at 0.05C to 1.5V. The capacity of the coin cell at this point is recorded as the reversible specific capacity.

Test method for initial coulombic efficiency: a coin cell is placed in a constant temperature chamber at 25°C in a Land battery testing system (T-3002A-5V 1mA). The cell is rested for 6h. The coin cell is discharged at 0.1C to 1.0mV, rested for 10min, and discharged at 0.01C to 1.0mV. The discharge capacity D is recorded. The cell is then charged at 0.05C to 1.5V, and the charging capacity of the coin cell at this point is recorded as the specific capacity C.

The initial coulombic efficiency is calculated using the following formula: initial coulombic efficiency (%)=C/D × 100%.

Charging window: the cells from the above examples and comparative examples are charged and discharged for the first time with a current of 1C (i.e., the current required to fully discharge the theoretical capacity in 1h). Specifically, at 35°C, a cell is charged at a constant current of 1C rate to a voltage of 4.4V, then charged at a constant voltage until the current is ≤ 0.05C, rested for 5 min, and then discharged at a constant current of 0.33C rate to a voltage of 2.5V. Its actual capacity is recorded as C₀. Then, the cell is sequentially charged at constant currents of 1.0C₀, 2.0C₀, 3.0C₀, 4C₀, 5C₀, and 6C₀ to the full cell charging cut-off voltage of 4.4V or the negative electrode cut-off potential of 0V (whichever is reached first). After each charge is completed, the cell is discharged at 1C₀ to the full cell discharge cut-off voltage of 2.5V. The rate range where no lithium plating occurs on the negative electrode sheet when charged to 100% State of Charge (SOC, where SOC=0 means the cell is fully discharged, and SOC=100% means the cell is fully charged) at different charging rates is recorded as the fast-charging window.

Cycling performance test: a pouch full cell is placed in a constant temperature chamber at 25°C in a Neware battery testing system (BTS-5V6A). The cell is rested for 1 h, charged at a constant current of 1C to 4.3V, then charged at a constant voltage until the current is 0.05C, rested for 5 min, and then discharged at a constant current of 1C to 2.8V. Its initial capacity is recorded as C0. Then, charging and discharging cycles are performed according to the aforementioned process, and the discharge capacity Cₙ of each cycle is recorded until the cycle capacity retention rate (Cₙ/C₀ × 100%) reaches 80%, at which point the number of cycles is recorded.

The specific test results are shown in the tables below.

**Table 1**

| | Coated Material Parameters | | | | | Graphite negative electrode material Parameters | | | |
|---|---|---|---|---|---|---|---|---|---|
| | Oxygen content (ppm) | Volatile matter (%) | True density (g/cm³) | D2 (µm) | (Dᵥ90-Dᵥ10) /Dᵥ50 | Id/Ig | D1 (µm) | (Dᵥ90-Dᵥ10) /Dᵥ50 | D1-D2 (µm) |
| Example 1 | 1500 | 1.2 | 2.02 | 13.5 | 0.93 | 0.25 | 14.2 | 0.96 | 0.7 |
| Example 2 | 800 | 2.5 | 1.95 | 13.2 | 0.91 | 0.16 | 14.5 | 1.25 | 1.3 |
| Example 3 | 1000 | 0.8 | 2.08 | 14.1 | 0.95 | 0.30 | 14.3 | 0.96 | 0.2 |
| Example 4 | 1200 | 1.1 | 2.03 | 12.9 | 0.94 | 0.24 | 13.6 | 0.98 | 0.7 |
| Example 5 | 1600 | 1.2 | 2.01 | 12.6 | 1.01 | 0.26 | 13.2 | 1.03 | 0.6 |
| Comparative Example 1 | / | / | / | / | / | 0.27 | 16.8 | 1.42 | / |
| Comparative Example 2 | 1450 | 1.3 | 2.03 | 13.8 | 0.98 | 0.25 | 14.9 | 1.23 | 1.1 |
| Comparative Example 3 | 900 | 2.9 | 1.85 | 12.8 | 1.05 | 0.18 | 15.5 | 1.27 | 2.7 |

**Table 2**

| | Reversible specific capacity (mAh/g) | Initial coulombic efficiency (%) | Charging window (C) | Cycle life (cycle) |
|---|---|---|---|---|
| Example 1 | 356 | 94.1 | 1-5 | 4000 |
| Example 2 | 357 | 94.5 | 1-3 | 4000 |
| Example 3 | 354 | 93.2 | 1-5 | 4000 |
| Example 4 | 355 | 93.7 | 1-4 | 4000 |
| Example 5 | 352 | 93.4 | 1-6 | 5000 |
| Comparative Example 1 | 354 | 93.7 | 1-3 | 3500 |
| Comparative Example 2 | 355 | 93.7 | 1-3 | 3500 |
| Comparative Example 3 | 356 | 94.2 | 1-2 | 3500 |

The data from Examples 1-5 and Comparative Examples 1-3 in the tables above show that when the reversible specific capacity and initial coulombic efficiency are comparable, the charging window and cycle life of the examples are generally superior to those of the comparative examples. This indicates that the graphite negative electrode material obtained by the preparation method of the present disclosure could achieve both an improvement in fast-charging performance and a good capacity. The data from Example 2 and Comparative Example 3 show that a coating temperature that is too low results in an excessively large D1-D2 value for the material, which is detrimental to the improvement of fast-charging performance and cycling performance.

It is apparent that the above-mentioned embodiments are merely illustrative examples and are not intended to limit the implementation. For a person of ordinary skill in the art, other variations or modifications in different forms can be made on the basis of the above description. It is neither necessary nor possible to exhaust all embodiments herein. Any obvious variations or modifications derived therefrom shall still fall within the protection scope of the present invention.

## Claims

1. A method for preparing a graphite negative electrode material, comprising:
S1, mixing graphite with a coating agent to obtain a mixture at a temperature of 30-200°C;
S2, coating the mixture at a temperature of 200-800°C to obtain a coated material;
S3, carbonizing the coated material to obtain the graphite negative electrode material.

2. The method for preparing the graphite negative electrode material according to claim 1, wherein a particle size of the graphite negative electrode material in step S3 and a particle size of the coated material in step S2 satisfy the following relational expression: D1-D2 ≤1.5µm, wherein D1 is a Dᵥ50 of the graphite negative electrode material, and D2 is a Dᵥ50 of the coated material.

3. The method for preparing the graphite negative electrode material according to claim 1 or claim 2, wherein the graphite is one or more of artificial graphite, natural graphite, or recycled graphite;
optionally, the graphite is artificial graphite secondary particles;
optionally, a method for preparing the artificial graphite secondary particles comprises: pulverizing a coke material to obtain pulverized coke material, then mixing the pulverized coke material with a binder, granulating, and finally performing a graphitization to obtain graphitized material;
optionally, a sulfur content of the coke material is 0.2-5wt%; a Dᵥ50 of the pulverized coke material is 4-10µm; (Dᵥ90-Dᵥ10)/Dᵥ50=1.0-1.5;
optionally, a Dᵥ50 of the granulated material is 8-18µm;
optionally, (Dᵥ90-Dᵥ10)/Dᵥ50=1.0-1.4.

4. The method for preparing the graphite negative electrode material according to claim 3, wherein in step S2, the coating is performed in a state of stirring or rotating;
optionally, a rotation speed of the stirring or rotating is 5-500rpm;
optionally, a time of the stirring or rotating is 1-12h.

5. The method for preparing the graphite negative electrode material according to claim 3, wherein at least one of the following (1) to (10) is satisfied:
(1) the coating agent is a coal-based liquid coating agent or a petroleum-based liquid coating agent;
optionally, the coal-based liquid coating agent is a coal chemical liquid by-product with a specific distillation range and carbon residue value, and comprises at least one of coal tar, phenol oil, naphthalene oil, wash oil, or anthracene oil;
optionally, the petroleum-based liquid coating agent is a petrochemical liquid by-product with a specific distillation range and carbon residue value, and comprises at least one of residual oil, slurry oil, heavy oil, or liquid pitch;
(2) the coating agent has a dynamic viscosity of 20-1000mPa·s at 60°C;
(3) according to a mass of coated carbon residue, an addition of the liquid coating agent accounts for 0.1-3% of a total mass of the coated carbon residue and the graphite;
(4) a mixing time of the graphite and the coating agent is 0.1-12h;
(5) the coke material comprises at least one of petroleum coke, pitch coke, or needle coke;
(6) the binder is at least one of petroleum pitch, coal pitch, a phenolic resin, an epoxy resin, or starch;
(7) an amount of the binder used accounts for 2-20% of a total mass of the raw material;
(8) a granulation temperature is 300-650°C; a heating time is 4-12h;
(9) a graphitization temperature is 2500-3500°C; a graphitization power transmission time is 5-60h;
(10) a degree of graphitization of the graphitized material is 90%-95%.

6. The method for preparing the graphite negative electrode material according to any one of claims 1 or 5, wherein the coated material in step S2 includes at least one of the following features (a) to (e):
(a) an oxygen content of the coated material is 100-10000ppm;
(b) a true density of the coated material is 1.80-2.26g/cm³;
(c) a volatile matter residue of the coated material is 0.5%-3%;
(d) a particle size Dᵥ50 of the coated material is 7-16µm;
(e) a (Dᵥ90-Dᵥ10)/Dᵥ50 of the coated material is 0.9-1.3.

7. The method for preparing the graphite negative electrode material according to claim 1, wherein in step S3, a temperature of the carbonizing is 1000-1500°C, and a time of the carbonizing is 2-24h.

8. A graphite negative electrode material, wherein an Id/Ig in Raman spectrum of the graphite negative electrode material is 0.1-0.4, and (Dᵥ90-Dᵥ10)/Dᵥ50 is 0.9-1.3.

9. The graphite negative electrode material according to claim 8, wherein an oxygen content of the graphite negative electrode material is 100-5000ppm, and Dᵥ50 is 12-16µm.

10. A negative electrode sheet, comprises the graphite negative electrode material according to claim 8.

11. A lithium-ion battery, comprises the negative electrode sheet according to claim 10.
